Europäisches Patentamt

European Patent Office

Office européen des brevets

(19)

(11) Numéro de publication: **0 031 557 B1**

(12) **FASCICULE DE BREVET EUROPEEN**

(45) Date de publication du fascicule du brevet:
01.08.84

(51) Int. Cl.³: **H 04 B 9/00,** H 04 M 1/57, H 04 Q 3/52

(21) Numéro de dépôt: **80108041.7**

(22) Date de dépôt: **19.12.80**

(54) **Dispositif de téléphonie optique.**

(30) Priorité: **28.12.79 FR 7931979**

(43) Date de publication de la demande:
**08.07.81 Bulletin 81/27**

(45) Mention de la délivrance du brevet:
**01.08.84 Bulletin 84/31**

(84) Etats contractants désignés:
**BE CH DE FR GB IT LI NL SE**

(56) Documents cités:
**FR - A - 1 495 003**
**FR - A - 2 298 237**
**FR - A - 2 337 386**
**FR - A - 2 399 161**
**US - A - 2 602 886**
**US - A - 3 455 625**
**US - A - 3 716 790**
**US - A - 3 932 023**
**US - A - 3 953 727**

**APPLIED OPTICS, vol. 13, no. 11, novembre 1974 New York US M.C. HUDSON et F.L. THIEL: "The star coupler: a unique interconnection component for multimode optical waveguide communications systems", pages 2540-2545**

(73) Titulaire: **COMPAGNIE GENERALE D'ELECTRICITE Société anonyme dite:, 54, rue La Boétie, F-75382 Paris Cedex 08 (FR)**

(72) Inventeur: **Robieux, Jean, 5, rue du Professeur Roger Leroux, F-92290 Chatenay-Malabry (FR)**

(74) Mandataire: **Weinmiller, Jürgen et al, Zeppelinstrasse 63, D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dispositif de téléphonie optique.

Dans les dispositifs de téléphonie couramment utilisés, chaque abonné dispose d'un poste comportant chacun un microphone et un écouteur, capables de convertir un signal acoustique en un signal électrique et inversement. Les différents postes sont reliés par des fils électriques à un centre de commutation électrique. Chaque poste comporte un sélecteur, par exemple du type à cadran tournant, pour permettre à chaque abonné de former à partir de son poste un signal caractéristique d'un autre abonné avec lequel il désire entrer en communication. Ce signal est transmis au centre de commutation qui comporte des moyens pour alerter, par une sonnerie par exemple, l'abonné appelé, de façon à pouvoir établir la communication entre l'appelant et l'appelé.

Depuis la découverte des fibres optiques à faibles pertes et du laser à semi-conducteur fonctionnant à la température ambiante, des essais ont été effectués pour réaliser par voie optique la transmission des informations de chaque poste d'abonné au centre de commutation. Pour cela, chaque poste comporte un laser à semi-conducteur émettant une onde lumineuse à une extrémité d'une fibre optique d'émission dont l'autre extrémité est reliée au centre de commutation. Chaque poste comporte en outre des moyens pour moduler l'amplitude de l'onde lumineuse émise par la fréquence du signal électrique délivré par le microphone, ainsi que des moyens pour démoduler le signal optique transmis par une fibre optique de réception du centre de commutation au poste. Les fibres optiques d'émission et de réception de chaque poste sont reliées par leur autre extrémité au centre de commutation par l'intermédiaire de transducteurs électro-optiques convertissant les signaux optiques modulés en signaux électriques et inversement. Le centre de commutation reste absolument identique aux centres de commutation électriques utilisés couramment dans les dispositifs de téléphonie électrique.

Le dispositif de téléphonie optique décrit ci-dessus présente l'inconvénient de conserver un centre de commutation électrique complexe et onéreux et de nécessiter des transducteurs électro-optiques pour chaque fibre aboutissant au centre de commutation.

La présente invention a pour but de pallier cet inconvénient et de réaliser un dispositif de téléphonie optique particulièrement simple dans lequel la commutation s'effectue aussi par voie optique.

La présente invention a pour objet un dispositif de téléphonie optique capable de mettre en communication entre eux N abonnés, comportant

– N postes téléphoniques affectés respectivement aux N abonnés, chaque poste comprenant un microphone recevant les paroles de l'abonné et délivrant en retour un signal électronique d'émission, un écouteur recevant un signal électrique de réception et délivrant en retour un signal acoustique perçu par l'abonné, un générateur laser capable de délivrer une onde lumineuse d'émission, des moyens pour moduler l'amplitude de l'onde lumineuse d'émission par la fréquence dudit signal électrique d'émission et un récepteur photo-électrique revevant une onde lumineuse de réception et capable de délivrer en retour ledit signal électrique de réception dont la fréquence module l'amplitude de ladite onde lumineuse de réception,

– N couples de fibres optiques reliés respectivement aux postes téléphoniques des N abonnés, chaque couple comprenant une fibre optique d'émission et une fibre optique de réception, la fibre optique d'émission recevant à une première de ses extrémités ladite onde lumineuse d'émission, la fibre optique de réception transmettant ladite onde lumineuse de réception et la délivrant, à sa première extrémité, audit récepteur photo-électrique,

– et un centre d'interconnexion auquel sont reliées les deuxièmes extrémités des N couples de fibres optiques, caractérisé en ce que

– ledit centre d'interconnexion est un volume dont la surface est formée au moins partiellement par les faces desdites deuxièmes extrémités des N couples de fibres optiques

– et que, des fréquences optiques différentes entre elles $F_1$---$F_N$ étant affectées respectivement à chaque abonné, des fréquences de modulation différentes entre elles $f_1$-----$f_N$ étant affectées respectivement à chaque abonné, les fréquences de modulation étant inférieures aux fréquences optiques,

– le générateur laser de l'abonné p délivre une onde lumineuse d'émission de fréquence $F_p$ affectée à l'abonné p,

– le poste téléphonique de l'abonné p comporte en outre

  – des moyens pour moduler l'amplitude de ladite onde lumineuse d'émission de fréquence $F_p$ par la fréquence de modulation $f_n$ affectée à l'abonné n,

  – N-1 filtres optiques capables de ne laisser passer respectivement que les fréquences $F_1$---$F_{p-1}$, $F_{+1}$---$F_N$, l'entrée de chacun de ces filtres optiques étant disposés pour recevoir ladite onde lumineuse de réception,

  – N-1 détecteurs électro-optiques sélectifs recevant l'énergie lumineuse sortant respectivement des N-1 filtres optiques, ces détecteurs ne délivrant un signal que si l'amplitude de l'énergie lumineuse qu'ils reçoivent est modulée à la fréquence $f_p$,

  – des moyens recevant les signaux électriques délivrés par lesdits détecteurs sélectifs et capables de signaler à l'abonné p l'ordre n du filtre de fréquence $F_n$ dont le rayonnement de sortie a provoqué l'émission d'un signal électrique du détecteur sélectif recevant ce rayonnement de sortie,

  – et un conducteur optique dont une extrémité est disposée sur la face d'entrée dudit récepteur photo-électrique et des moyens pour disposer l'autre extrémité dudit conducteur optique sur la sortie dudit filtre optique de fréquence $F_n$.

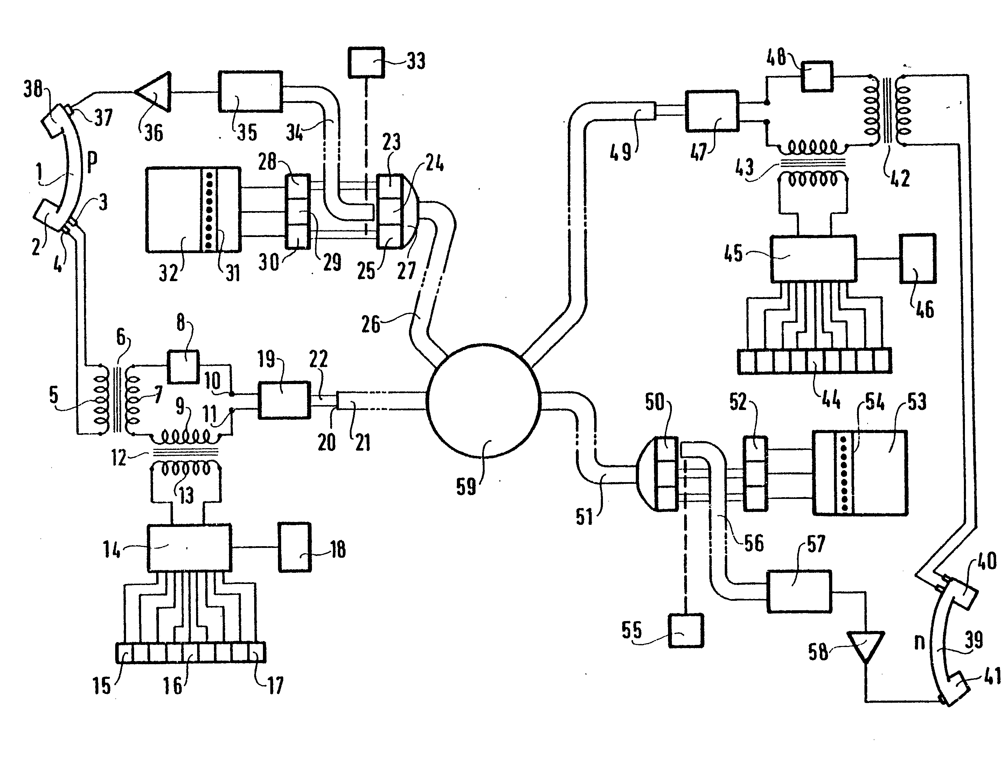

Une forme d'exécution de l'objet de la présente invention est décrite ci-dessous, à titre d'exemple en regard de la figure unique qui représente schématiquement un mode de réalisation du dispositif de téléphonie selon l'invention.

Sur la figure est représenté un dispositif de téléphonie optique permettant de mettre en communication entre eux N abonnés, N pouvant être de l'ordre de 100. Pour simplifier la figure, nous avons représenté deux des postes d'un dispositif pour 10 abonnés. A chaque abonné est affecté un numéro d'ordre de 1 à N.

Chaque abonné possède un appareil dit «combiné» de type courant comportant un microphone et un écouteur. Par exemple l'abonné de rang p possède un combiné 1 comportant un microphone 2 devant lequel il peut parler. Le microphone 2 délivre à ses bornes de sortie 3 et 4 un signal électrique représentatif des paroles prononcées. Les extrémités de l'enroulement primaire 5 d'un transformateur 6 sont connectés aux deux bornes 3 et 4. L'enroulement secondaire 7 du transformateur 6 est connecté en série avec une source 8 de courant continu basse tension et avec un enroulement 9, de façon à former une branche dont les extrémités sont connectées à deux bornes 10 et 11. L'enroulement 9 est l'enroulement secondaire d'un transformateur 12. Les extrémités de l'enroulement primaire 13 du transformateur 12 sont reliées à un circuit de connexion 14. Les sorties de N–1 générateurs électriques tels que 15, 16 et 17 sont reliées au circuit 14. La sortie électrique d'un sélecteur électromécanique 18 est également relié au circuit 14. Ce sélecteur peut être du type bien connu à cadran tournant, utilisé dans les installations téléphoniques.

Les deux électrodes d'un laser 19 à semi-conducteur, de préférence du type fonctionnant à température ambiante, sont connectées aux bornes 10 et 11. Une face extrême 20 d'une fibre optique 21 est disposée de façon à recevoir le faisceau lumineux 22 émis par le laser 19.

L'installation téléphonique de l'abonné p comporte en outre N–1 filtres optiques tels que 23, 24 et 25. Ces filtres sont juxtaposés en parallèle de façon que leur face d'entrée forme une surface plane aussi faible que possible.

Dans l'exemple représenté sur la figure il y a 9 fitres qui sont disposés de façon que ladite surface plane soit un carré.Ce carré est debout par rapport au plan de la figure de sorte qu'on ne voit que trois filtres formant un côté du carré.

Cette surface carrée reçoit le rayonnement sortant d'une face extrême d'une fibre optique 26 à travers un organe de connexion optique 27. Les faces de sortie des filtres optiques forment ainsi une petite surface plane. En regard des faces de sortie de ces filtres optiques sont disposées respectivement les faces d'entrée de N–1 détecteurs électro-optiques sélectifs tels que 28, 29 et 30 dont les sorties électriques sont reliées à travers N–1 voyants 31 à une sonnerie électrique 32.

Un dispositif à commande nécanique 33 permet de disposer une face extrême d'une fibre optique 34 sur la face de sortie d'un quelconque des filtres 23 à 25. L'autre face extrême de la fibre 34 est disposée contre la face d'entrée d'un récepteur photo-électrique 35 dont la sortie électrique est connectée à travers un amplificateur 36 à l'entrée 37 de l'écouteur 38 du combiné 1.

De même l'abonné de rang n possède une installation, tout à fait analogue à celle de l'abonné p, comportant un combiné 39 muni d'un microphone 40 et d'un écouteur 41.

La partie émission de l'installation de l'abonné n comporte ainsi un transformateur 42 dont l'enroulement primaire est relié au microphone 40 et un transformateur 43 dont l'enroulement primaire est alimenté par N–1 générateurs électriques tels que 44 à travers un circuit de connexion 45 commandé par un sélecteur 46. Les électrodes d'un laser à semi-conducteur 47 sont connectées respectivement aux extrémités d'une branche comprenant en série un générateur de courant continue 48 et les enroulements secondaires des transformateurs 42 et 43. Le faisceau lumineux émis par le laser 47 est reçu par une face extrême d'une fibre optique 49.

La partie réception de l'installation de l'abonné n comporte N–1 filtres optiques tels que 50 dont les faces d'entrée reçoivent le faisceau lumineux sortant d'une face extrême d'une fibre optique 51. Des détecteurs électro-optiques sélectifs tels que 52 reçoivent les faisceaux lumineux sortant des filtres 50 et leurs sorties électriques sont connectées à une sonnerie électrique 53 à travers un tableau de voyants 54. Un dispositif à commande mécanique 55 permet de disposer une face extrême d'une fibre optique 56 contre la face de sortie d'un filtre 50 quelconque, l'autre face extrême de cette fibre étant disposée contre la face d'entrée optique d'un récepteur électro-optique 57 dont la sortie électrique est reliée à l'écouteur 41 à travers un amplificateur 58.

Les autres faces extrêmes des fibres 21, 26, 49, 51, ainsi que les faces extrêmes correspondantes des autres fibres optiques non représentées aboutissant aux installations électriques des autres abonnés, sont disposées l'une à côté de l'autre de manière à former une surface délimitant un volume d'interconnexion 59 aussi faible que possible. Ce volume peut être une sphère ou un cube par exemple. Il peut être rempli d'un matériau dont l'indice de réfraction est proche de celui des fibres optiques, ce matériau pouvant être un liquide ou un verre par exemple.

Le dispositif de téléphonie optique décrit ci-dessus et représenté sur la figure fonctionne de la manière suivante.

A chaque abonné est attribué une fréquence porteuse d'émission choisie dans la gamme des ondes optiques. C'est ainsi qu'une fréquence $F_p$ est affectée à l'abonné de rang p et $F_n$ à l'abonné de rang n. Les différentes fréquences $F_1$----$F_N$ sont par exemple séparées entre elles par des intervalles égaux.

A chaque abonné est attribué également une fréquence de modulation. Bien entendu, les fréquences de modulation sont bien plus faibles que les fréquences porteuses d'émission. Les différentes fréquences de modulation $f_1$------$f_N$ peuvent être choisies par exemple dans la gamme des ondes ultrasonores et peuvent être séparées entre elles par des intervalles égaux.

Lorsque l'abonné p désire entrer en communication avec l'abonné n, il forme son numéro sur le sélecteur 18.

Les N–1 générateurs électriques 15 à 17 délivrent des courants alternatifs de fréquences respectives $f_1$ à $f_N$, $f_p$ exceptée. Dès que le numéro n est formé sur le sélecteur 18, le circuit 14 connecte le générateur 16 délivrant un courant de fréquence $f_n$ au bobinage 13.

Le laser à semi-conducteur 19 alimenté par le générateur 8 délivre un faisceau lumineux de fréquence $F_p$ spécifique de l'abonné p. L'amplitude de ce faisceau est modulée par la fréquence $f_n$ spécifique de l'abonné n grâce à la présence de l'enroulement 9 en série dans le circuit d'alimentation du laser.

L'onde optique $F_p{}^n$ de fréquence $F_p$ modulée à la fréquence $f_n$ est transmise par la fibre optique 21 au volume d'interconnexion 59. La fibre optique 51 reliée aussi à ce volume d'interconnexion reçoit une onde à fréquence multiple. En effet cette onde comporte non seulement une partie de l'onde $F_p{}^n$ mais aussi une partie des différentes ondes émises éventuellement à partir des postes des autres abonnés non représentés et passant à travers le volume d'interconnexion 59. L'onde optique transmise par la fibre optique 51 arrive à l'entrée des filtres 50 faisant partie de l'installation de l'abonné n. Les N–1 filtres 50 sont des filtres optiques ne laissant passer respectivement que les fréquences $F_1$----$F_N$, $F_n$ exceptée. Ces filtres de type interférentiel peuvent par exemple être formés essentiellement de réseaux optiques. Les détecteurs optiques sélectifs 52, au nombre de N–1, reçoivent respectivement les faisceaux lumineux sortant des filtres 50. Ces détecteurs sont capables de délivrer un courant sur leurs sorties électriques seulement lorsque les faisceaux lumineux qu'ils reçoivent contiennent la fréquence $f_n$ spécifique de l'abonné n.

Comme la fibre optique 51 transmet une onde optique contenant l'onde $F_p{}^n$ émise par le laser 19, un des détecteurs sélectifs, par exemple le détecteur 52 est excité, ce détecteur recevant le faisceau lumineux sortant du filtre 50 de fréquence $F_p$. Le signal électrique délivré par le détecteur 52 provoque l'allumage d'un voyant 54 qui indique à l'abonné n que c'est l'abonné p qui l'appelle. L'allumage d'un voyant quelconque de l'abonné n provoque le déclenchement de la sonnerie électrique 53.

L'abonné n ainsi alerté dispose, à l'aide du dispositif 55, la face de l'extrémité libre de la fibre optique 56 en face de la sortie du filtre 50 laissant passer la fréquence $F_p$. Bien entendu, cette extrémité de la fibre optique 56 est placée, en l'absence de communication, en dehors de l'espace compris entre la face de sortie des filtres 50 et la face d'entrée des récepteurs 52, de façon à ne pas empêcher le passage des faisceaux lumineux des filtres aux récepteurs. Il est noté que les dispositifs mécaniques 33 et 55 peuvent être remplacés par des dispositifs automatiques recevant les signaux électriques émis par les détecteurs sélectifs 28 à 30 ou 52.

L'abonné n, sachant que l'abonné p l'appelle, forme son numéro sur le sélecteur 46 de façon à créer à la sortie du laser 47 une onde lumineuse $F_n{}^p$ de fréquence porteuse $F_n$ (spécifique de l'abonné n) modulé à la fréquence $f_p$ (spécifique de l'abonné p).

Cette onde $F_n{}^p$ est transmise par la fibre 49 au volume d'interconnexion 59 et reçue par la fibre optique 26. Le voyant correspondant à n du tableau des voyants 31 s'allume; l'abonné p sait alors que l'abonné n a bien perçu son appel et est prêt à entrer en communication. A l'aide du dispositif 33 il place l'extrémité libre de la fibre 34 en face du filtre 24 qui laisse passer la fréquence $F_n$.

Bien entendu la modulation de l'onde $F_p$ à la fréquence $f_n$ est automatiquement stoppée dès que l'abonné n a décroché son combiné, et inversement la modulation à la fréquence $f_p$ de l'onde $F_n$ est stoppée dès que l'abonné p sait que l'abonné n a perçu son appel.

Lorsque l'abonné p parle devant le microphone 2, le courant d'alimentation du laser 19 est modulé à la fréquence des paroles prononcées, grâce à la présence de l'enroulement secondaire 7 du transformateur 6 en série dans le circuit d'alimentation du laser 19. Le laser 19 émet donc une onde $F_p$ modulée à la fréquence des paroles prononcées par l'abonné p devant la microphone de son combiné. Cette onde est transmise par la fibre 21, le volume 59, la fibre 51, le filtre 50 et la fibre 56 à l'entrée du récepteur 57 où elle est démodulée. L'abonné n entend donc les paroles prononcées par l'abonné p après passage du courant délivré par le récepteur 57 à travers l'amplificateur 58 et l'écouteur 41.

De même l'abonné p entend dans son écouteur 38 les paroles prononcées par l'abonné n devant son microphone 40.

La communication est alors établie dans les deux sens entre les abonnés du rang p et n.

Le dispositif de téléphonie selon l'invention présente les avantages suivants:
– les émetteurs et les récepteurs peuvent être réalisés par des méthodes collectives utilisées dans l'industrie des semi-conducteurs. Il en résulte un faible prix et une haute fiabilité,
– le centre de connexion est très simple,
– ce dispositif peut comporter un grand nombre d'abonnés, car le nombre d'ondes porteuses optiques peut être très élevé.

Le dispositif de téléphonie selon la présente invention peut être utilisé par exemple dans un ensemble industriel important.

**Revendications**

1. Dispositif de téléphonie optique capable de mettre en communication entre eux N abonnés, comportant

- N postes téléphoniques affectés respectivement aux N abonnés, chaque poste comprenant un microphone (2) recevant les paroles de l'abonné et délivrant en retour un signal électrique d'émission, un écouteur (3) recevant un signal électrique de réception et délivrant en retour un signal acoustique perçu par l'abonné, un générateur laser (19) capable de délivrer une onde lumineuse d'émission, des moyens (5, 6, 7) pour moduler l'amplitude de l'onde lumineuse d'émission par la fréquence dudit signal électrique d'émission et un récepteur photo-électrique (35) recevant une onde lumineuse de réception et capable de délivrer en retour ledit signal électrique de réception dont la fréquence module l'amplitude de ladite onde lumineuse de réception,
- N couples (21, 26) de fibres optiques reliés respectivement aux postes téléphoniques des N abonnés, chaque couple comprenant une fibre optique d'émission (21) et une fibre optique de réception (26), la fibre optique d'émission recevant à une première de ses extrémités ladite onde lumineuse d'émission, la fibre optique de réception transmettant ladite onde lumineuse de réception et la délivrant, à sa première extrémité, audit récepteur photo-électrique,
- et un centre d'interconnexion auquel sont reliés les deuxièmes extrémités des N couples de fibres optiques, caractérisé en ce que
- ledit centre d'interconnexion est un volume (59) dont la surface est formée au moins partiellement par les faces desdites deuxièmes extrémités des N couples de fibres optiques
- et que, des fréquences optiques différentes entre elles $F_1$----$F_N$ étant affectées respectivement à chaque abonné, des fréquences de modulation différentes entre elles $f_1$-----$f_N$ étant affectées respectivement à chaque abonné, les fréquences de modulation étant inférieures aux fréquences optiques,
- le générateur laser (19) de l'abonné p délivre une onde lumineuse d'émission de fréquence $F_p$ affectée à l'abonné p,
- le poste téléphonique de l'abonné p comporte en outre
  - des moyens (9, 12 à 18) pour moduler l'amplitude de ladite onde lumineuse d'émission de fréquence $F_p$ par la fréquence de modulation $f_n$ affectée à l'abonné n,
  - N-1 filtres optiques (23 à 25) capables de ne laisser passer respectivement que les fréquences $F_1$---$F_{p-1}$, $F_{p+1}$---$F_N$, l'entrée de chacun de ces filtres optique étant disposée pour recevoir ladite onde lumineuse de réception,
  - N-1 détecteurs électro-optiques (28 à 30) sélectifs recevant l'énergie lumineuse sortant respectivement des N-1 filtres optiques, ces détecteurs ne délivrant un signal électrique que si l'amplitude de l'énergie lumineuse qu'ils reçoivent est modulée à la fréquence $f_p$,
  - des moyens (31, 32) recevant les signaux électriques délivrés par lesdits détecteurs sélectifs et capables de signaler à l'abonné p l'ordre n du filtre de fréquence $F_n$ dont le rayonnement de sortie a provoqué l'émission d'un signal électrique du détecteur sélectif recevant ce rayonnement de sortie,
  - et un conducteur optique (34) dont une extrémité est disposée sur la face d'entrée dudit récepteur photo-électrique (35) et des moyens (33) pour disposer l'autre extrémité dudit conducteur optique sur la sortie dudit filtre optique (24) de fréquence $F_n$.

2. Dispositif selon la revendication 1, caractérisé en ce que ledit générateur laser (19) est un laser à semi-conducteur et que chaque poste comporte en outre une source (8) de courant continu reliée par un circuit d'alimentation (7, 9) aux électrodes de ce laser.

3. Dispositif selon la revendication 2, caractérisé en ce que lesdits moyens (5, 6, 7) pour moduler l'amplitude de l'onde lumineuse d'émission par le fréquence dudit signal électrique d'émission comportent un transformateur (6), les extrémités de l'enroulement primaire (5) de ce transformateur étant reliées aux bornes de sortie dudit microphone (2) et l'enroulement secondaire (7) de ce transformateur étant connecté en série dans le circuit d'alimentation du laser.

4. Dispositif selon la revendication 2, caractérisé en ce que lesdits moyens (9, 12 à 18) pour moduler l'amplitude de ladite onde lumineuse d'émission de fréquence $F_p$ par la fréquence de modulation $f_n$ affectée à l'abonné n que l'abonné p désire appeler comportent N-1 générateurs électriques (15, 16, 17) de fréquences respectives $f_1$---$f_{p-1}$, $f_{p+1}$---$f_N$, un transformateur (12) dont l'enroulement secondaire (9) est connecté en série dans le circuit d'alimentation du laser et dont l'enroulement primaire (13) est relié à travers un circuit de connexion (14) aux sorties desdits N-1 générateurs électriques, et un sélecteur (18) capable de commander ledit circuit de connexion de façon à relier la sortie du générateur électrique de fréquence $f_n$ affectée à l'abonné n que l'abonné p désire appeler aux extrémités de l'enroulement primaire de ce transformateur.

5. Dispositif selon la revendication 1, caractérisé en ce que ledit centre d'interconnexion est une sphère (59).

6. Dispositif selon la revendication 1, caractérisé en ce que ledit centre d'interconnexion est un cube.

7. Dispositif selon la revendication 1, caractérisé en ce que ledit centre d'interconnexion est rempli d'un matériau dont l'indice de réfraction est voisin de celui desdites fibres optiques.

8. Dispositif selon la revendication 7, caractérisé en ce que ledit matériau est un verre.

9. Dispositif selon la revendication 7, caractérisé en ce que ledit matériau est un liquide.

10. Dispositif selon la revendication 1, caractérisé en ce que lesdits moyens (31, 32) recevant les signaux électriques délivrés par lesdits détecteurs sélectifs et capables de signaler à l'abonné p l'ordre n du filtre de fréquence $F_n$ dont le rayonnement de sortie a provoqué l'émission d'un signal électrique du détecteur sélectif recevant ce rayonnement de sortie comportent des voyants lumineux (31).

## Claims

1. An optical telephony device which is capable of putting N subscribers in communication with one another, said device including:
- N telephone sets ascribed respectively to the N subscribers, each set including a microphone (2) into which a subscriber speaks and which delivers in return an electric send signal, an earphone (38) which receives an electric receive signal and which delivers in return an acoustic signal heard by the subscriber, a laser generator (19) which is capable of delivering a send light wave, means (5, 6, 7) for modulating the amplitude of the send light wave by the frequency of said electric send signal, and a photoelectric receiver (35) which receives a receive light wave and is capable of delivering in return said electric receive signal at whose frequency the amplitude of said receive light is modulated,
- N pairs (21, 26) of optical fibres connected to respective ones of the telephone sets of the N subscribers, each pair including a send optical fibre (21) and a receive optical fibre (26), a first end of the send optical fibre receiving said send light wave, the receive optical fibre transmitting said receive light wave and delivering it at the first end to said photoelectric receiver, and
- an interconnection centre to which the second ends of the N pairs of optical fibres are connected, characterized in that
- said interconnection centre is a volume (59) whose surface is formed at least partially by the faces of said second ends of the N pairs of optical fibres,
- and that, optical frequencies $F_1$---$F_N$ which are different from one another being ascribed to respective subscribers, modulation frequencies $f_1$---$f_N$ which are different from one another being ascribed to respective subscribers, the modulation frequencies being lower than the optical frequencies,
- subscriber p's laser generator (19) delivers a send light wave of frequency $F_p$ ascribed to subscriber p,
- subscriber p's telephone set further includes
  - means (9, 12 to 18) for modulating the amplitude of said send light wave of frequency $F_p$ by the modulation frequency $f_n$ ascribed to subscriber n,
  - N–1 optical filters (23 to 25) capable of passing only frequencies $F_1$---$F_{p-1}$, $F_{p+1}$---$F_N$ respectively, the input of each of these optical filters being disposed to receive said receive light wave,
  - N–1 selective electro-optical detectors (28 to 30), which receive the light energy that emerges from respective ones of the N–1 optical filters, these detectors delivering an electric signal only if the amplitude of the light energy they receive is modulated at the frequency $f_p$,
  - means (31, 32) which receive the electric signals delivered by said selective detectors, said means being capable of informing subscriber p of the order n of the filter of frequency $F_n$ whose output radiation is causing the emission of an electric signal from the selective detector which receives said output radiation,
  - and an optical conductor (34) one of whose ends is disposed on the input face of said photoelectric receiver (35), and means (33) for disposing the other end of said optical conductor on the output of said optical filter (24) of frequency $F_n$..

2. A device according to claim 1, characterized in that said laser generator (19) is a semiconductor laser and in that each set further includes a DC source (8) connected to the electrodes of said laser by a supply circuit (7, 9).

3. A device according to claim 2, characterized in that said means (5, 6, 7) for modulating the amplitude of the send light wave by the frequency of said send electric signal include a transformer (6) having a primary winding (5) whose ends are connected to the output terminals of said microphone (2), and a secondary winding (7) which is connected in series in the supply circuit of the laser.

4. A device according to claim 2, characterized in that said means (9, 12 to 18) for modulating the amplitude of said send light wave of frequency $F_p$ by the modulation frequency $f_n$ ascribed to subscriber n with whom subscriber p wishes to communicate include N–1 electric generators (15, 16, 17) whose respective frequencies are $f_1$---$f_{p-1}$, $f_{p+1}$---$f_N$, a transformer (12) with a secondary winding (9) which is connected in series in the supply circuit of the laser, and a primary winding (13) which is connected via a connection circuit (14) to the outputs of said N–1 electric generators, and a selector capable of controlling said connection circuit so as to connect the ends of the primary winding of the transformer to the output of the electric generator of frequency $f_n$ ascribed to subscriber n with whom subscriber p wishes to communicate.

5. A device according to claim 1, characterized in that said interconnection centre is a sphere (59).

6. A device according to claim 1, characterized in that said interconnection centre is a cube.

7. A device according to claim 1, characterized in that said interconnection centre is filled with a substance whose refractive index is close to that of said optical fibres.

8. A device according to claim 7, characterized in that said substance is glass.

9. A device according to claim 7, characterized in that said substance is a liquid.

10. A device according to claim 1, characterized in that indicator lights (31) are included in said means (31, 32) which receive the electric signals delivered by said selective detectors, for signalling to subscriber p the order n of the filter of

frequency $F_n$, whose output radiation causes the emission of an electric signal from the selective detector which receives said output radiation.

## Patentansprüche

1. Optische Telefonvorrichtung, die N Teilnehmer miteinander verbinden kann und aufweist:
- N je einem der Teilnehmer zugeordnete Telefonapparate mit je einem die Sprache des Teilnehmers empfangenden und daraus ein elektrisches Sendesignal erzeugenden Mikrophon (2), einem ein elektrisches Empfangssignal empfangenden und daraus ein für den Teilnehmer vernehmbares akustisches Signal erzeugenden Hörer (38), mit einem Lasergenerator (19), der eine Sendelichtwelle ausgeben kann, mit Mitteln (5, 6, 7) zur Modulation der Amplitude der Sendelichtwelle durch die Frequenz des elektrischen Sendesignals und mit einem lichtelektrischen Empfänger (35), der eine Empfangslichtwelle zugeführt erhält und daraus das elektrische Empfangssignal ableitet, dessen Frequenz die Amplitude der Empfangslichtwelle moduliert,
- N Paare (21, 26) von Lichtleitern, die mit je einem der N Teilnehmergeräte verbunden sind und je aus einem Sendelichtleiter (21) und einem Empfangslichtleiter (26) bestehen, wobei der Sendelichtleiter (21) an einem ersten seiner Enden eine Sendelichtwelle zugeführt erhält, während der Empfangslichtleiter die Empfangslichtwelle überträgt und an seinem ersten Ende an den lichtelektrischen Empfänger abgibt,
- und ein Verbindungszentrum, an das die zweiten Enden der N Paare von Lichtleitern angeschlossen sind, dadurch gekennzeichnet, dass
- das Verbindungszentrum ein Volumen (59) ist, dessen Oberfläche mindestens teilweise von den Stirnflächen der zweiten Enden der N Lichtleiterpaare gebildet wird,
- und dass, unter der Voraussetzung, dass unterschiedliche optische Frequenzen $F_1$---$F_N$ den einzelnen Teilnehmern zugeordnet sind und unterschiedliche Modulationsfrequenzen $f_1$---$f_N$, die tiefer als die optischen Frequenzen liegen, den einzelnen Teilehmern zugeordnet sind,
- der Lasergenerator (19) des Teilnehmers p eine Sendelichtwelle der dem Teilnehmer p zugeordneten Frequenz $F_p$ liefert,
- und dass das Endgerät des Teilnehmers p ausserdem aufweist
  - Mittel (9, 12 bis 18) zur Modulation der Amplitude der Sendelichtwelle der Frequenz $F_p$ mit der dem Teilnehmer n zugeordneten Modulationsfrequenz $f_n$,
  - N–1 optische Filter (23–25), die je eine der Frequenzen $F_1$ bis $F_{p-1}$ und $F_{p+1}$ bis $F_N$ durchlassen und deren Eingänge die Empfangslichtwelle empfangen,
  - N–1 selektive elektro-optische Detektoren (28 bis 30), die die aus je einem der N–1 optischen Filter kommende Lichtenergie empfangen und nur dann ein elektrisches Signal liefern, wenn die Amplitude der Empfangslichtenergie mit der Frequenz $f_p$ moduliert ist,
  - Mittel (31, 32), die die von den selektiven Detektoren gelieferten Signale empfangen und dem Teilnehmer p die Ordnung n des Filters der Frequenz $F_n$ angeben, dessen Ausgangsstrahlung die Aussendung eines elektrischen Signals durch den Detektor bewirkt, der diese Ausgangsstrahlung empfängt,
  - und einen Lichtleiter (34), dessen eines Ende an der Eingangsfläche des lichtelektrischen Empfängers (35) angeordnet ist, und Mittel (33), mit denen das andere Ende des Lichtleiters an den Ausgang des optischen Filters (24) der Frequenz $F_n$ angelegt wird.

2. Vorrichtung nach Anspruch 1, dadurch gekennzeichnet, dass der Lasergenerator (19) ein Halbleiterlaser ist und dass jeder Teilnehmerapparat ausserdem eine Gleichstromquelle (8) besitzt, die über einen Versorgungsschaltkreis (7, 9) an die Elektroden dieses Lasers angeschlossen ist.

3. Vorrichtung nach Anspruch 2, dadurch gekennzeichnet, dass die Mittel (5, 6, 7) zur Modulation der Amplitude der Sendelichtwelle mit der Frequenz des elektrischen Sendesignals einen Transformator (6) aufweisen, dessen Primärwicklungsanschlüsse (5) an die Ausgangsklemmen des Mikrophons (2) angeschlossen sind und dessen Sekundärwicklung (7) in Reihe im Versorgungsschaltkreis des Lasers liegt.

4. Vorrichtung nach Anspruch 2, dadurch gekennzeichnet, dass die Mittel (9, 12 bis 18) zur Amplitudenmodulation der Sendelichtwelle der Frequenz $F_p$ mit der Modulationsfrequenz $f_n$ des Teilnehmers n, den der Teilnehmer p anzurufen wünscht, N–1 elektrische Frequenzgeneratoren (15, 16, 17) mit den Frequenzen $f_1$---$f_{p-1}$, $f_{p+1}$---$f_N$, einen Transformator (12), dessen Sekundärwicklung (9) in Reihe im Versorgungsschaltkreis des Lasers liegt und dessen Primärwicklung (13) über einen Verbindungsschaltkreis (14) an die Ausgänge der N–1 elektrischen Generatoren angeschlossen ist, und einen Wähler (18) aufweisen, der in der Lage ist, den Verbindungsschaltkreis so zu steuern, dass der Ausgang des elektrischen Generators der Frequenz $f_n$, der dem Teilnehmer n zugeordnet ist, welchen der Teilnehmer p anrufen will, an die Klemmen der Primärwicklung dieses Transformators angeschlossen ist.

5. Vorrichtung nach Anspruch 1, dadurch gekennzeichnet, dass das Verbindungszentrum eine Kugel (59) ist.

6. Vorrichtung nach Anspruch 1, dadurch gekennzeichnet, dass das Verbindungszentrum ein Würfel ist.

7. Vorrichtung nach Anspruch 1, dadurch gekennzeichnet, dass das Verbindungszentrum mit einem Material gefüllt ist, dessen Brechungsindex dem der Lichtleiter benachbart ist.

8. Vorrichtung nach Anspruch 7, dadurch gekennzeichnet, dass das Material ein Glas ist.

9. Vorrichtung nach Anspruch 7, dadurch gekennzeichnet, dass das Material eine Flüssigkeit ist.

10. Vorrichtung nach Anspruch 1, dadurch gekennzeichnet, dass die Mittel (31, 32), die die von den selektiven Detektoren gelieferten elektrischen Signale empfangen, die dem Teilnehmer p die Ordnung n des Filters der Frequenz $F_n$ melden,

dessen Ausgangsstrahlung die Aussendung eines elektrischen Signals des diese Ausgangsstrahlung empfangenden selektiven Detektors hervorgerufen hat, Anzeigelampen (31) aufweisen.

0 031 557